# EUROPEAN PATENT APPLICATION

(11) **EP 4 844 623 A1**
(43) Date of publication of application: **25.11.2026**
(21) Application number: 24917957.3
(22) Date of filing: 18.06.2024
(51) Int. Cl.: G06F 30/20, B62D 15/00

(54) **ESTIMATION SYSTEM FOR RACK FORCE OF STEER-BY-WIRE SYSTEM**

(30) Priority: 17.01.2024 CN 202410064942
(71) Applicant: Bosch Huayu Steering Systems Co., Ltd., Shanghai 201821 (CN)
(72) Inventor: WU, Jianjun, Shanghai 201821 (CN); LIANG, Dengyu, Shanghai 201821 (CN); JU, Gaolin, Shanghai 201821 (CN); GAO, Senqi, Shanghai 201821 (CN); HUANG, Gang, Shanghai 201821 (CN); ZHANG, Dan, Shanghai 201821 (CN); YANG, Zhicheng, Shanghai 201821 (CN); MIN, Lingkun, Shanghai 201821 (CN); SUN, Rui, Shanghai 201821 (CN); XU, Jianguo, Shanghai 201821 (CN)
(74) Representative: Cameron Intellectual Property Ltd
(86) International application number: PCT/CN2024/099884
(87) International publication number: WO 2025/152342

(57) **Abstract**

The present disclosure provides an estimation system for a rack force of a steer-by-wire system. The estimation system comprises a signal preprocessing module, a rack force estimation module, and an estimation result post-processing module. In any traveling situation, a generalized rack force estimated by said estimation system is kept highly consistent with a tie rod force collected by a sensor, and the estimation is rapid, thereby making the experience in road sense feedback close to the EPS characteristics.

## Description

The present disclosure claims the right of priority of Chinese Patent Application No. 202410064942X filed on January 17, 2024. The contents of the Chinese patent application are incorporated herein by reference in its entirety.

### TECHNICAL FIELD

The present disclosure relates to the technical field of steering systems, and particularly to a rack force estimation system for a steer-by-wire system.

### BACKGROUND

In a steer-by-wire (SBW) system, a mechanical connection between a steering wheel and a steering actuation mechanism is eliminated, such that an upper steering mechanism is decoupled from a lower steering mechanism. This contributes to improving the response of a chassis of an autonomous driving system, and reduces space occupation as well as facilitating achieving functions such as variable transmission ratio that are impossible with conventional electric power steering (EPS). However, such a mechanical decoupling prevents road surface conditions from being directly fed back to the steering wheel, depriving a driver of the ability to perceive the road surface conditions. This is detrimental to driving, and thus how to provide real-time feedback on road feel has become challenging.

Road feel is a critical means for the driver to perceive motion states and surroundings of a vehicle, second only to vision, and acts as an important supplement to the vision. Several main methods for road feel feedback are described below:
1. Sensor measurement method: A force sensor is mounted on a steering tie rod to obtain a tie rod force and thus a road feel feedback torque. However, this approach incurs additional costs, and creates new requirements for mechanical structures and reliability.
2. Data fitting method: Data fitting is performed on vehicle states and parameter information to obtain a nonlinear function that can describe the road feel, and the fitting coefficients are modified according to the needs of different drivers for the road feel to simulate the road feel preferred by the drivers. This approach allows for flexible design of road feel, but requires a large amount of data fitting, and the resulting road feel feedback is not matched to the road feel of the EPS system in most cases.
3. Dynamic model estimation method: This approach starts from a physical model, builds a model of a steering system and makes an estimation with a mathematical model. There are usually two modes, one is to build a tire model to estimate the self-aligning torque of a tire, which includes road surface information and can thus be used as a road feel feedback; and the other one is to build a rack model to estimate a rack force, which also includes road surface information. Of the two modes, the tire-model approach is too complex, and the tire is a strongly nonlinear object, making it less suitable for practical engineering applications.

Estimating a rack force is an excellent option for obtaining real road feel feedback and ease of implementation, but the existing methods for estimating a rack force exhibit poor estimation performance on a rough road (such as a cobblestone road and a road with speed bumps). Therefore, there is a need to develop a system having high robustness, strong generalization capability and rapid estimation.

### SUMMARY

In order to overcome the shortcomings of the prior art, the present disclosure provides a rack force estimation system for a steer-by-wire system, which uses a Kalman filter algorithm based on accurate modeling to set correct parameters to allow for fast convergence of the algorithm and accurate and prompt estimation in any traveling situation.

To achieve the above objective, a rack force estimation system for a steer-by-wire system is designed, comprising a signal preprocessing module, a rack force estimation module and an estimation result post-processing module, wherein
the signal preprocessing module comprises a rack displacement signal processing unit, a rack velocity signal processing unit, and a motor torque signal processing unit, wherein
the rack displacement signal processing unit is configured to convert an angle of rotation of a steering motor into a rack displacement;
the rack velocity signal processing unit is configured to convert a speed of rotation of the steering motor into a rack velocity; and
the motor torque signal processing unit is configured to convert a motor torque into a rack driving force;
the rack force estimation module comprises a steering system dynamic model unit and a Kalman filter estimation unit, wherein
the steering system dynamic model unit is configured to build an equivalent system dynamic model; and
the Kalman filter estimation unit derives a state-space equation from the equivalent system dynamic model and expands a rack force to be estimated to a corresponding state quantity based on the state-space equation; and
the estimation result post-processing module comprises an estimation result filtering processing unit and an estimation result phase compensation processing unit, wherein
the estimation result filtering processing unit is configured to select different filter coefficients for filtering processing based on a first logical strategy; and
the estimation result phase compensation processing unit is configured to select different phase compensation parameters for phase compensation processing based on a second logical strategy.

Preferably, the equivalent system dynamic model considers a steering motor, a reduction mechanism, a rack mechanism and a steering column of a steer-by-wire system as an equivalent rack system, and an equivalent dynamic differential equation for the equivalent rack system is: $M {{x}_{r}}^{. .} + B {{x}_{r}}^{.} = \frac{{T}_{m} {g}_{m}}{{r}_{pg}} + {F}_{f} + {F}_{r} ;$
wherein M is an equivalent system mass, B is an equivalent system damping factor, Tₘ is a motor torque, F_{f} is an equivalent system friction force, Fᵣ is an acting force of a tie rod on a rack, gₘ is a transmission ratio of a motor reduction mechanism, r_{pg} is a transmission ratio between the rack and the motor reduction mechanism, *x*ᵣ is a rack displacement, ${{x}_{r}}^{.}$ is a rack velocity, and ${{x}_{r}}^{. .}$, is a rack acceleration.

Preferably, the steering system dynamic model unit is further configured to use a sum of the equivalent system friction force F_{f} and the acting force Fᵣ of the tie rod on the rack in the equivalent dynamic differential equation as a generalized rack force F_{R}, wherein: ${F}_{R} = {F}_{r} + {F}_{f} ;$
based on the generalized rack force F_{R}, the equivalent system dynamic differential equation is transformed into: $M {{x}_{r}}^{. .} + B {{x}_{r}}^{.} = \frac{{T}_{m} {g}_{m}}{{r}_{pg}} + {F}_{R} ;$
and the equivalent dynamic differential equation is rewritten into a corresponding state-space equation: $\left\{\begin{matrix}\left(\begin{matrix}{{x}_{r}}^{.} \\ {{x}_{r}}^{. .}\end{matrix}\right) = \left(\begin{matrix}0 & 1 \\ 0 & - \frac{B}{M}\end{matrix}\right) \left(\begin{matrix}{x}_{r} \\ {{x}_{r}}^{.}\end{matrix}\right) + \left(\begin{matrix}0 & 0 \\ \frac{1}{M} & \frac{1}{M}\end{matrix}\right) \left(\begin{matrix}\frac{{T}_{m} {g}_{m}}{{r}_{pg}} \\ {F}_{R}\end{matrix}\right) \\ \left(\begin{matrix}{y}_{1} \\ {y}_{2}\end{matrix}\right) = \left(\begin{matrix}1 & 0 \\ 0 & 1\end{matrix}\right) \left(\begin{matrix}{x}_{r} \\ {{x}_{r}}^{.}\end{matrix}\right)\end{matrix}\right. ;$
wherein *xᵣ* is a first state variable of the equivalent rack system, and ${{x}_{r}}^{.}$ is a second state variable of the equivalent rack system.

Preferably, the Kalman filter estimation unit is further configured to reconstruct the state-space equation by:
defining the generalized rack force F*_{R}* as a third state variable F_{R} of the equivalent rack system;
assuming that ${{F}_{R}}^{.} = k {F}_{R}$ and *k* is a zero or non-zero constant, reconstructing the state-space equation into: $\left\{\begin{matrix}\left(\begin{matrix}{{x}_{r}}^{.} \\ {{x}_{r}}^{. .} \\ {{F}_{R}}^{.}\end{matrix}\right) = \left(\begin{matrix}0 & 1 & 0 \\ 0 & - \frac{B}{M} & \frac{1}{M} \\ 0 & 0 & k\end{matrix}\right) \left(\begin{matrix}{x}_{r} \\ {{x}_{r}}^{.} \\ {F}_{R}\end{matrix}\right) + \left(\begin{matrix}0 \\ \frac{{g}_{m}}{{Mr}_{pg}} \\ 0\end{matrix}\right) {T}_{m} \\ \left(\begin{matrix}{y}_{1} \\ {y}_{2} \\ {y}_{3}\end{matrix}\right) = \left(\begin{matrix}1 & 0 & 0 \\ 0 & 1 & 0 \\ 0 & 0 & 1\end{matrix}\right) \left(\begin{matrix}{x}_{r} \\ {{x}_{r}}^{.} \\ {F}_{R}\end{matrix}\right)\end{matrix}\right. ;$
discretizing the reconstructed state-space equation to obtain a discrete form of state-space equation as follows: $\left\{\begin{matrix}\left(\begin{matrix}{x}_{{r}_{k + 1}} \\ {\dot{x}}_{{r}_{k + 1}} \\ {F}_{{R}_{k + 1}}\end{matrix}\right) = \left[\left(\begin{matrix}0 & 1 & 0 \\ 0 & - \frac{B}{M} & \frac{1}{M} \\ 0 & 0 & k\end{matrix}\right){Δ}_{t}+I\right] \left(\begin{matrix}{x}_{{r}_{k}} \\ {\dot{x}}_{{r}_{k}} \\ {F}_{{R}_{k}}\end{matrix}\right) + \left[\left(\begin{matrix}0 \\ \frac{{g}_{m}}{{Mr}_{pg}} \\ 0\end{matrix}\right){Δ}_{t}\right] {T}_{{m}_{k}} \\ \left(\begin{matrix}{y}_{{1}_{k} + 1} \\ {y}_{{2}_{k + 1}} \\ {y}_{{3}_{k + 1}}\end{matrix}\right) = \left(\begin{matrix}1 & 0 & 0 \\ 0 & 1 & 0 \\ 0 & 0 & 1\end{matrix}\right) \left(\begin{matrix}{x}_{{r}_{k + 1}} \\ {\dot{x}}_{{r}_{k + 1}} \\ {F}_{{R}_{k + 1}}\end{matrix}\right)\end{matrix}\right. ;$
wherein Δ*ₜ* is a sampling time of the rack force estimation module, and *I* is an identity matrix;
based on a Kalman filter design, simplifying the discrete form of state-space equation into the following form: $\left\{\begin{matrix}{x}_{k + 1} = {Gx}_{k} + {Fu}_{k} \\ {y}_{k + 1} = {Cx}_{k + 1}\end{matrix};\right.$
wherein ${x}_{k + 1} = \left(\begin{matrix}{x}_{{r}_{k + 1}} \\ {\dot{x}}_{{r}_{k + 1}} \\ {F}_{{R}_{k + 1}}\end{matrix}\right) , {x}_{k} = \left(\begin{matrix}{x}_{{r}_{k}} \\ {\dot{x}}_{{r}_{k}} \\ {F}_{{R}_{k}}\end{matrix}\right) , {u}_{k} = {T}_{{m}_{k}} , {y}_{k + 1} = \left(\begin{matrix}{y}_{{1}_{k + 1}} \\ {y}_{{2}_{k + 1}} \\ {y}_{{3}_{k + 1}}\end{matrix}\right) , G =$ $\left[\left(\begin{matrix}0 & 1 & 0 \\ 0 & - \frac{B}{M} & \frac{1}{M} \\ 0 & 0 & k\end{matrix}\right){Δ}_{t}+I\right] , F = \left[\left(\begin{matrix}0 \\ \frac{{g}_{m}}{{Mr}_{pg}} \\ 0\end{matrix}\right){Δ}_{t}\right]$, and $C = \left(\begin{matrix}1 & 0 & 0 \\ 0 & 1 & 0 \\ 0 & 0 & 1\end{matrix}\right)$; and
based on Kalman filter principles, designing the following iterative estimation formula: $\left\{\begin{matrix}{x}_{k + 1}^{′} = {Gx}_{k} + {Fu}_{k} \\ {P}_{pre} = GPG ′ + Q \\ K = {P}_{pre} H ′ / \left({HP}_{pre}H′+R\right) \\ P = \left(I-KH\right) {P}_{pre} \\ {x}_{k + 1} = {x}_{k + 1}^{′} + K \left({Z}_{k}-{Hx}_{k + 1}^{′}\right)\end{matrix}\right. ;$
wherein Q and R are diagonal matrices, and an initial value of *P* is a diagonal matrix, *H* is a measurement matrix, and *Zₖ* is an actual measurement value.

Preferably, the actual measurement value *Zₖ* is a rack displacement *x_{rᵣₑₐₗ}* output from the signal preprocessing module, and the measurement matrix H is (1 0 0).

Preferably, when *k* in the equation ${{F}_{R}}^{.} = k {F}_{R}$ is a non-zero constant, a range of values of *k* is (0, 2000), an estimate of a generalized rack force in the Kalman filter estimation unit is multiplied by the non-zero constant *k*₁ to obtain an actual generalized rack force, a range of values of the non-zero constant *k*₁ being (-10000, 10000).

Preferably, the rack displacement signal processing unit is further configured to perform amplitude limiting processing on the rack displacement signal and then perform first-order low-pass filtering processing on the rack displacement signal to obtain a target rack displacement signal;
the rack velocity signal processing unit is further configured to perform amplitude limiting processing on the rack velocity signal and then perform first-order low-pass filtering processing on the rack velocity signal to obtain a target rack velocity signal; and
the motor torque signal processing unit is further configured to perform amplitude limiting processing on the motor torque signal and then perform first-order low-pass filtering processing on the motor torque signal to obtain a target motor torque signal.

Preferably, the estimation result filtering processing unit is further configured to apply first-order low-pass filtering processing to an estimated generalized rack force, and a corresponding filter coefficient is selected based on a rack velocity, a rack acceleration, an angle of a steering wheel and an angular velocity of the steering wheel.

Preferably, the estimation result phase compensation processing unit is further configured to apply phase lead processing to an estimated generalized rack force, and the phase compensation parameters are selected based on a rack velocity and a rack acceleration by:
obtaining a two-dimensional lookup table based on the rack velocity and the rack acceleration, the rack velocity or the rack acceleration in the two-dimensional lookup table being positively correlated with the phase compensation parameters.

Preferably, the Kalman filter estimation unit is further configured to estimate the rack displacement and the rack velocity.

Compared with the prior art, the present disclosure provides a rack force estimation method for a steer-by-wire system, which uses a Kalman filter algorithm based on accurate modeling to set correct parameters to allow for fast convergence of the algorithm and accurate and prompt estimation in any traveling situation.

### BRIEF DESCRIPTION OF THE DRAWINGS

FIG. 1 is a structural block diagram of a rack force estimation system for a steer-by-wire system according to the present disclosure.
FIG. 2 is a schematic structural diagram of a steering actuator module according to the present disclosure.
FIG. 3 is a schematic diagram of a steering actuator module equivalent system according to the present disclosure.
FIG. 4 is a graph of the comparison between rack force estimates according to the present disclosure.
FIG. 5 is a graph of the comparison between rack force estimates according to the present disclosure.

### DETAILED DESCRIPTION OF THE PREFERRED EMBODIMENT

### Example 1

The present disclosure is further described below with respect to the accompanying drawings.

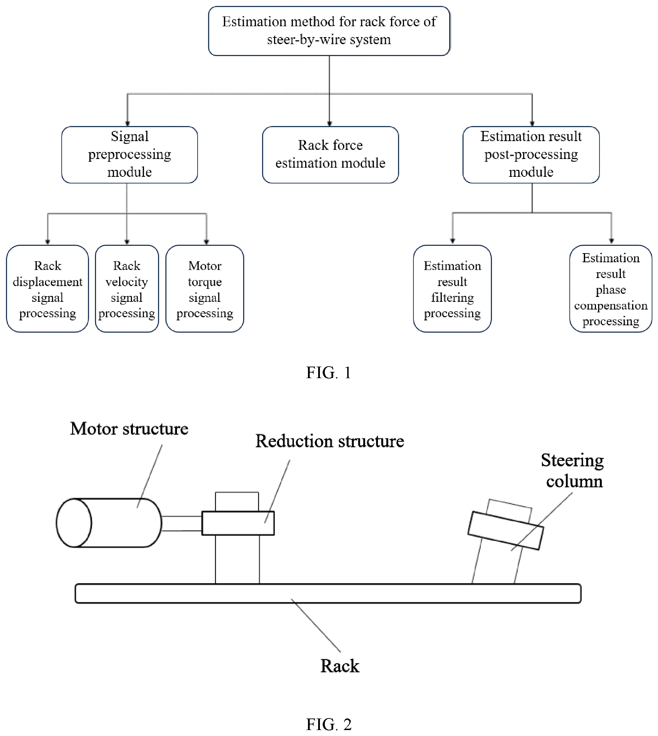

As shown in FIG. 1, a rack force estimation system for a steer-by-wire system comprises a signal preprocessing module, a rack force estimation module and an estimation result post-processing module, wherein
the signal preprocessing module comprises a rack displacement signal processing unit, a rack velocity signal processing unit, and a motor torque signal processing unit, wherein
the rack displacement signal processing unit is configured to convert an angle of rotation of a steering motor into a rack displacement;
the rack velocity signal processing unit is configured to convert a speed of rotation of the steering motor into a rack velocity; and
the motor torque signal processing unit is configured to convert a motor torque into a rack driving force;
the rack force estimation module comprises a steering system dynamic model unit and a Kalman filter estimation unit, wherein
the steering system dynamic model unit is configured to build an equivalent system dynamic model; and
the Kalman filter estimation unit derives a state-space equation from the equivalent system dynamic model and expands a rack force to be estimated to a corresponding state quantity based on the state-space equation; and
the estimation result post-processing module comprises an estimation result filtering processing unit and an estimation result phase compensation processing unit, wherein
the estimation result filtering processing unit is configured to select different filter coefficients for filtering processing based on a first logical strategy; and
the estimation result phase compensation processing unit is configured to select different phase compensation parameters for phase compensation processing based on a second logical strategy.

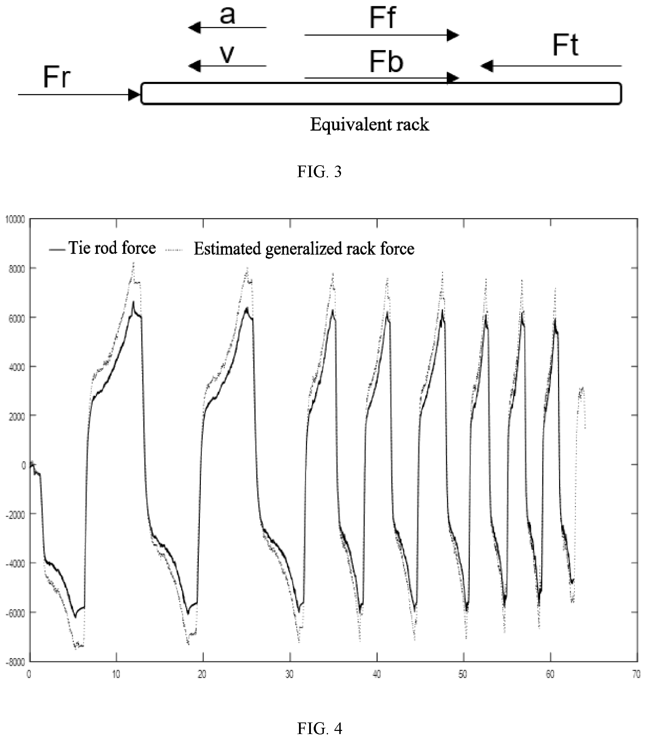

As shown in FIG. 2, this figure is a schematic structural diagram of a steering actuator module, which comprises a steering motor, a reduction mechanism, a rack mechanism, and a steering column. Because the four parts are mechanically connected, the equivalent system dynamic model considers the steering motor, the reduction mechanism, the rack mechanism and the steering column of a steer-by-wire system as an equivalent rack system. The steering actuator module equivalent system is as shown in FIG. 3, in which Fᵣ is an acting force of a tie rod on an equivalent rack, a is an acceleration of the equivalent rack, v is an equivalent rack velocity, F_{f} is a friction force of the equivalent rack, F_{b} is a damping force of the equivalent rack, Ft is a driving force of the motor, and an equivalent dynamic differential equation for the equivalent rack system is: $M {{x}_{r}}^{. .} + B {{x}_{r}}^{.} = \frac{{T}_{m} {g}_{m}}{{r}_{pg}} + {F}_{f} + {F}_{r} ;$
wherein M is an equivalent system mass, B is an equivalent system damping factor, Tₘ is a motor torque, F_{f} is an equivalent system friction force, Fᵣ is an acting force of a tie rod on a rack, gₘ is a transmission ratio of a motor reduction mechanism, r_{pg} is a transmission ratio between the rack and the motor reduction mechanism, xᵣ is a rack displacement, ${{x}_{r}}^{.}$ is a rack velocity, and ${{x}_{r}}^{. .}$ is a rack acceleration.

As an embodiment, the steering system dynamic model unit is further configured to use a sum of the equivalent system friction force F_{f} and the acting force Fᵣ of the tie rod on the rack in the equivalent dynamic differential equation as a generalized rack force F_{R}, wherein: ${F}_{R} , {F}_{R} = {F}_{r} + {F}_{f} ;$
based on the generalized rack force F_{R}, the equivalent system dynamic differential equation is transformed into: $M {{x}_{r}}^{. .} + B {{x}_{r}}^{.} = \frac{{T}_{m} {g}_{m}}{{r}_{pg}} + {F}_{R} ;$
and the equivalent dynamic differential equation is rewritten into a corresponding state-space equation: $\left\{\begin{matrix}\left(\begin{matrix}{{x}_{r}}^{.} \\ {{x}_{r}}^{. .}\end{matrix}\right) = \left(\begin{matrix}0 & 1 \\ 0 & - \frac{B}{M}\end{matrix}\right) \left(\begin{matrix}{x}_{r} \\ {{x}_{r}}^{.}\end{matrix}\right) + \left(\begin{matrix}0 & 0 \\ \frac{1}{M} & \frac{1}{M}\end{matrix}\right) \left(\begin{matrix}\frac{{T}_{m} {g}_{m}}{{r}_{pg}} \\ {F}_{R}\end{matrix}\right) \\ \left(\begin{matrix}{y}_{1} \\ {y}_{2}\end{matrix}\right) = \left(\begin{matrix}1 & 0 \\ 0 & 1\end{matrix}\right) \left(\begin{matrix}{x}_{r} \\ {{x}_{r}}^{.}\end{matrix}\right)\end{matrix}\right. ;$
wherein *xᵣ* is a first state variable of the equivalent rack system, and ${{x}_{r}}^{.}$ is a second state variable of the equivalent rack system.

As an embodiment, the Kalman filter estimation unit is further configured to reconstruct the state-space equation by:
defining the generalized rack force *F_{R}* as a third state variable *F_{R}* of the equivalent rack system;
assuming that ${{F}_{R}}^{.} = {kF}_{R}$ and *k* is a zero or non-zero constant, reconstructing the state-space equation into: $\left\{\begin{matrix}\left(\begin{matrix}{{x}_{r}}^{.} \\ {{x}_{r}}^{. .} \\ {{F}_{R}}^{.}\end{matrix}\right) = \left(\begin{matrix}0 & 1 & 0 \\ 0 & - \frac{B}{M} & \frac{1}{M} \\ 0 & 0 & k\end{matrix}\right) \left(\begin{matrix}{x}_{r} \\ {{x}_{r}}^{.} \\ {F}_{R}\end{matrix}\right) + \left(\begin{matrix}0 \\ \frac{{g}_{m}}{{Mr}_{pg}} \\ 0\end{matrix}\right) {T}_{m} \\ \left(\begin{matrix}{y}_{1} \\ {y}_{2} \\ {y}_{3}\end{matrix}\right) = \left(\begin{matrix}1 & 0 & 0 \\ 0 & 1 & 0 \\ 0 & 0 & 1\end{matrix}\right) \left(\begin{matrix}{x}_{r} \\ {{x}_{r}}^{.} \\ {F}_{R}\end{matrix}\right)\end{matrix}\right. ;$
discretizing the reconstructed state-space equation to obtain a discrete form of state-space equation as follows: $\left\{\begin{matrix}\left(\begin{matrix}{x}_{{r}_{k + 1}} \\ {\dot{x}}_{{r}_{k + 1}} \\ {F}_{{R}_{k + 1}}\end{matrix}\right) = \left[\left(\begin{matrix}0 & 1 & 0 \\ 0 & - \frac{B}{M} & \frac{1}{M} \\ 0 & 0 & k\end{matrix}\right){Δ}_{t}+I\right] \left(\begin{matrix}{x}_{{r}_{k}} \\ {\dot{x}}_{{r}_{k}} \\ {F}_{{R}_{k}}\end{matrix}\right) + \left[\left(\begin{matrix}0 \\ \frac{{g}_{m}}{{Mr}_{pg}} \\ 0\end{matrix}\right){Δ}_{t}\right] {T}_{{m}_{k}} \\ \left(\begin{matrix}{y}_{{1}_{k} + 1} \\ {y}_{{2}_{k + 1}} \\ {y}_{{3}_{k + 1}}\end{matrix}\right) = \left(\begin{matrix}1 & 0 & 0 \\ 0 & 1 & 0 \\ 0 & 0 & 1\end{matrix}\right) \left(\begin{matrix}{x}_{{r}_{k + 1}} \\ {\dot{x}}_{{r}_{k + 1}} \\ {F}_{{R}_{k + 1}}\end{matrix}\right)\end{matrix}\right. ;$
wherein Δ*ₜ* is a sampling time of the rack force estimation module, and *I* is an identity matrix;
based on a Kalman filter design, simplifying the discrete form of state-space equation into the following form: $\left\{\begin{matrix}{x}_{k + 1} = {Gx}_{k} + {Fu}_{k} \\ {y}_{k + 1} = {Cx}_{k + 1}\end{matrix};\right.$
wherein ${x}_{k + 1} = \left(\begin{matrix}{x}_{{r}_{k + 1}} \\ {\dot{x}}_{{r}_{k + 1}} \\ {F}_{{R}_{k + 1}}\end{matrix}\right) , {x}_{k} = \left(\begin{matrix}{x}_{{r}_{k}} \\ {\dot{x}}_{{r}_{k}} \\ {F}_{{R}_{k}}\end{matrix}\right) , {u}_{k} = {T}_{{m}_{k}} , {y}_{k + 1} = \left(\begin{matrix}{y}_{{1}_{k + 1}} \\ {y}_{{2}_{k + 1}} \\ {y}_{{3}_{k + 1}}\end{matrix}\right) , G =$ $\left[\left(\begin{matrix}0 & 1 & 0 \\ 0 & - \frac{B}{M} & \frac{1}{M} \\ 0 & 0 & k\end{matrix}\right){Δ}_{t}+I\right] , F = \left[\left(\begin{matrix}0 \\ \frac{{g}_{m}}{{Mr}_{pg}} \\ 0\end{matrix}\right){Δ}_{t}\right]$, and $C = \left(\begin{matrix}1 & 0 & 0 \\ 0 & 1 & 0 \\ 0 & 0 & 1\end{matrix}\right)$;
the principles of a Kalman filter algorithm comprising time updates and measurement updates, and designing the following iterative estimation formula based on the Kalman filter principles: $\left\{\begin{matrix}{x}_{k + 1}^{′} = {Gx}_{k} + {Fu}_{k} \\ {P}_{pre} = GPG ′ + Q \\ K = {P}_{pre} H ′ / \left({HP}_{pre}H′+R\right) \\ P = \left(I-KH\right) {P}_{pre} \\ {x}_{k + 1} = {x}_{k + 1}^{′} + K \left({Z}_{k}-{Hx}_{k + 1}^{′}\right)\end{matrix}\right. ;$
wherein Q and R are diagonal matrices, and an initial value of P is a diagonal matrix, H is a measurement matrix, and *Zₖ* is an actual measurement value.

As an embodiment, the actual measurement value *Zₖ* is a rack displacement signal *x_{rᵣₑₐₗ}* output from the signal preprocessing module, and the measurement matrix *H* is (1 0 0).

As an embodiment, when *k* in the equation ${{F}_{R}}^{.} = k {F}_{R}$ is a non-zero constant, a range of values of *k* is (0, 2000), an estimate of a generalized rack force in the Kalman filter estimation method is multiplied by the non-zero constant k1 to obtain an actual generalized rack force, a range of values of the non-zero constant k1 is (-10000, 10000), and specific values of *k* and k1 are specific values obtained after debugging in a simulation test.

As an embodiment, the rack displacement signal processing unit is further configured to perform amplitude limiting processing on the rack displacement signal and then perform first-order low-pass filtering processing on the rack displacement signal to obtain a target rack displacement signal;
the rack velocity signal processing unit is further configured to perform amplitude limiting processing on the rack velocity signal and then perform first-order low-pass filtering processing on the rack velocity signal to obtain a target rack velocity signal; and
the motor torque signal processing unit is further configured to perform amplitude limiting processing on the motor torque signal and then perform first-order low-pass filtering processing on the motor torque signal to obtain a target motor torque signal. As an embodiment, the estimation result filtering processing unit is further configured to apply first-order low-pass filtering processing to an estimated generalized rack force, and a corresponding filter coefficient is selected based on a rack velocity, a rack acceleration, an angle of a steering wheel and an angular velocity of the steering wheel.

As an embodiment, the estimation result phase compensation processing unit is further configured to apply phase lead processing to an estimated generalized rack force, and the phase compensation parameters are selected based on a rack velocity and a rack acceleration by:
obtaining a two-dimensional lookup table based on the rack velocity and the rack acceleration, the rack velocity or the rack acceleration in the two-dimensional lookup table being positively correlated with the phase compensation parameters.

As an embodiment, the Kalman filter estimation unit is further configured to estimate the rack displacement and the rack velocity.

In the present disclosure, the Kalman filter algorithm is used to estimate a rack force in real time, and the use of the Kalman filter algorithm enables real-time optimized gains, achieving the aims of high robustness and quick estimation. The estimation performance is excellent on rough roads and actual road feel feedback can be provided in any traveling situation.

According to the present disclosure, the rack force, the rack displacement and the rack velocity can all be estimated, and the estimated rack force can be used for optimization of angle control of the steer-by-wire system.

The present disclosure may also be used for estimation of a rack force in an electric power steering (EPS) system, which is of great significance for torque closed loop and steering feel optimization for the EPS system.

As shown in FIG. 4, the abscissa axis represents time in s (second), the ordinate axis represents a rack force in N (Newton), and this figure shows a graph of the comparison between the generalized rack force estimated according to the present disclosure and a tie rod force acquired by a sensor during traveling on an asphalt road surface, where the dashed line represents the generalized rack force estimated according to the present disclosure and the solid line represents the tie rod force acquired by the sensor. It can be seen from the figure that the generalized rack force estimated according to the present disclosure, and the tie rod force are highly consistent and have the same trend.

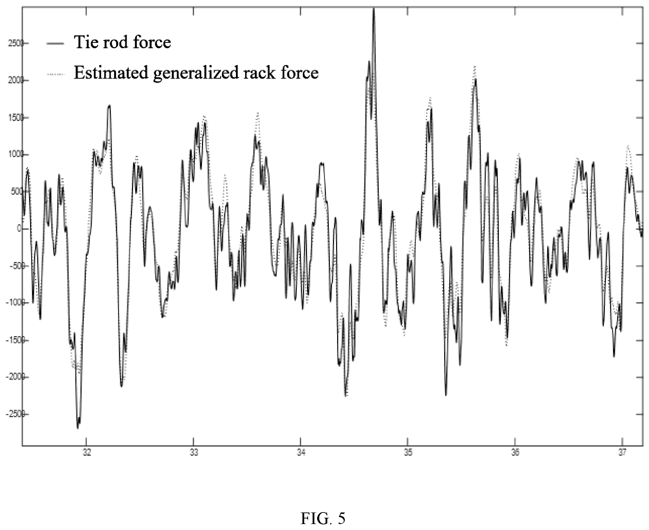

As shown in FIG. 5, the abscissa axis represents time in s, the ordinate axis represents a rack force in N, and FIG. 5 shows a graph of the comparison between the generalized rack force estimated according to the present disclosure and a tie rod force acquired by a sensor during traveling on a cobblestone road surface, where the dashed line represents the generalized rack force estimated according to the present disclosure, and the solid line represents the tie rod force acquired by the sensor. It can be seen that, on a rough road, the generalized rack force estimated according to the present disclosure and the tie rod force are still highly consistent, which indicates that the present disclosure has high robustness and strong generalization capability.

In a real vehicle test, the generalized rack force estimated according to the present disclosure is always highly consistent with the tie rod force acquired by the sensor in any traveling situation, and can be quickly estimated to provide experiences approximate to EPS characteristics in terms of road feel feedback.

Although the specific embodiments of the present disclosure have been described above, it should be understood by those skilled in the art that these are merely illustrative, and that various changes or modifications can be made to these embodiments without departing from the principles and essence of the present disclosure. Accordingly, the scope of protection of the present disclosure is defined by the appended claims.

## Claims

1. A rack force estimation system for a steer-by-wire system, **characterized by** comprising a signal preprocessing module, a rack force estimation module, and an estimation result post-processing module, wherein
the signal preprocessing module comprises a rack displacement signal processing unit, a rack velocity signal processing unit, and a motor torque signal processing unit, wherein
the rack displacement signal processing unit is configured to convert an angle of rotation of a steering motor into a rack displacement; and
the rack velocity signal processing unit is configured to convert a speed of rotation of the steering motor into a rack velocity;
the rack force estimation module comprises a steering system dynamic model unit and a Kalman filter estimation unit, wherein
the steering system dynamic model unit is configured to build an equivalent system dynamic model; and
the Kalman filter estimation unit derives a state-space equation from the equivalent system dynamic model and expands a rack force to be estimated to a corresponding state quantity based on the state-space equation; and
the estimation result post-processing module comprises an estimation result filtering processing unit and an estimation result phase compensation processing unit, wherein
the estimation result filtering processing unit is configured to select different filter coefficients based on a first logical strategy and select different filter coefficients for filtering processing based on a logical strategy; and
the estimation result phase compensation processing unit is configured to select different phase compensation parameters for phase compensation processing based on a second logical strategy.

2. The rack force estimation system for a steer-by-wire system according to claim 1, **characterized in that** the equivalent system dynamic model considers a steering motor, a reduction mechanism, a rack mechanism and a steering column of a steer-by-wire system as an equivalent rack system, and an equivalent dynamic differential equation for the equivalent rack system is: $M {{x}_{r}}^{. .} + B {{x}_{r}}^{.} = \frac{{T}_{m} {g}_{m}}{{r}_{pg}} + {F}_{f} + {F}_{r} ;$ wherein M is an equivalent system mass, B is an equivalent system damping factor, Tₘ is a motor torque, F_{f} is an equivalent system friction force, Fᵣ is an acting force of a tie rod on a rack, gₘ is a transmission ratio of a motor reduction mechanism, r_{pg} is a transmission ratio between the rack and the motor reduction mechanism, xᵣ is a rack displacement, ${{x}_{r}}^{.}$ is a rack velocity, and ${{x}_{r}}^{. .}$ is a rack acceleration.

3. The rack force estimation system for a steer-by-wire system according to claim 2, **characterized in that**
the steering system dynamic model unit is further configured to use a sum of the equivalent system friction force F_{f} and the acting force Fᵣ of the tie rod on the rack in the equivalent dynamic differential equation as a generalized rack force F_{R}, wherein: ${F}_{R} = {F}_{r} + {F}_{f} ;$
based on the generalized rack force F_{R}, the equivalent system dynamic differential equation is transformed into: $M {{x}_{r}}^{. .} + B {{x}_{r}}^{.} = \frac{{T}_{m} {g}_{m}}{{r}_{pg}} + {F}_{R} ;$
and the equivalent dynamic differential equation is rewritten into a corresponding state-space equation: $\left\{\begin{matrix}\left(\begin{matrix}{{x}_{r}}^{.} \\ {{x}_{r}}^{. .}\end{matrix}\right) = \left(\begin{matrix}0 & 1 \\ 0 & - \frac{B}{M}\end{matrix}\right) \left(\begin{matrix}{x}_{r} \\ {{x}_{r}}^{.}\end{matrix}\right) + \left(\begin{matrix}0 & 0 \\ \frac{1}{M} & \frac{1}{M}\end{matrix}\right) \left(\begin{matrix}\frac{{T}_{m} {g}_{m}}{{r}_{pg}} \\ {F}_{R}\end{matrix}\right) \\ \left(\begin{matrix}{y}_{1} \\ {y}_{2}\end{matrix}\right) = \left(\begin{matrix}1 & 0 \\ 0 & 1\end{matrix}\right) \left(\begin{matrix}{x}_{r} \\ {{x}_{r}}^{.}\end{matrix}\right)\end{matrix}\right. ;$
wherein *xᵣ* is a first state variable of the equivalent rack system, ${{x}_{r}}^{.}$ is a second state variable of the equivalent rack system, and *y*₁ and *y*₂ are outputs from the state-space equation and correspond to *xᵣ* and ${{x}_{r}}^{.}$, respectively.

4. The rack force estimation system for a steer-by-wire system according to claim 2, **characterized in that** the Kalman filter estimation unit is further configured to reconstruct the state-space equation by:
defining the generalized rack force *F_{R}* as a third state variable ${{F}_{R}}^{.}$ of the equivalent rack system;
assuming that ${{F}_{R}}^{.} = {kF}_{R}$ and *k* is a zero or non-zero constant, reconstructing the state-space equation into: $\left\{\begin{matrix}\left(\begin{matrix}{{x}_{r}}^{.} \\ {{x}_{r}}^{. .} \\ {{F}_{R}}^{.}\end{matrix}\right) = \left(\begin{matrix}0 & 1 & 0 \\ 0 & - \frac{B}{M} & \frac{1}{M} \\ 0 & 0 & k\end{matrix}\right) \left(\begin{matrix}{x}_{r} \\ {{x}_{r}}^{.} \\ {F}_{R}\end{matrix}\right) + \left(\begin{matrix}0 \\ \frac{{g}_{m}}{{Mr}_{pg}} \\ 0\end{matrix}\right) {T}_{m} \\ \left(\begin{matrix}{y}_{1} \\ {y}_{2} \\ {y}_{3}\end{matrix}\right) = \left(\begin{matrix}1 & 0 & 0 \\ 0 & 1 & 0 \\ 0 & 0 & 1\end{matrix}\right) \left(\begin{matrix}{x}_{r} \\ {{x}_{r}}^{.} \\ {F}_{R}\end{matrix}\right)\end{matrix}\right. ;$
wherein *y₃* is an additional output from the state-space equation and corresponds to F_{R};
discretizing the reconstructed state-space equation to obtain a discrete form of state-space equation as follows: $\left\{\begin{matrix}\left(\begin{matrix}{x}_{{r}_{k + 1}} \\ {\dot{x}}_{{r}_{k + 1}} \\ {F}_{{R}_{k + 1}}\end{matrix}\right) = \left[\left(\begin{matrix}0 & 1 & 0 \\ 0 & - \frac{B}{M} & \frac{1}{M} \\ 0 & 0 & k\end{matrix}\right){Δ}_{t}+I\right] \left(\begin{matrix}{x}_{{r}_{k}} \\ {\dot{x}}_{{r}_{k}} \\ {F}_{{R}_{k}}\end{matrix}\right) + \left[\left(\begin{matrix}0 \\ \frac{{g}_{m}}{{Mr}_{pg}} \\ 0\end{matrix}\right){Δ}_{t}\right] {T}_{{m}_{k}} \\ \left(\begin{matrix}{y}_{{1}_{k} + 1} \\ {y}_{{2}_{k + 1}} \\ {y}_{{3}_{k + 1}}\end{matrix}\right) = \left(\begin{matrix}1 & 0 & 0 \\ 0 & 1 & 0 \\ 0 & 0 & 1\end{matrix}\right) \left(\begin{matrix}{x}_{{r}_{k + 1}} \\ {\dot{x}}_{{r}_{k + 1}} \\ {F}_{{R}_{k + 1}}\end{matrix}\right)\end{matrix}\right. ;$
wherein Δ*ₜ* is a sampling time of the rack force estimation module, and *I* is an identity matrix;
based on a Kalman filter design, simplifying the discrete form of state-space equation into the following form: $\left\{\begin{matrix}{x}_{k + 1} = {Gx}_{k} + {Fu}_{k} \\ {y}_{k + 1} = {Cx}_{k + 1}\end{matrix};\right.$
wherein *x*_{*k*+1} is a state variable at a next moment, ${x}_{k + 1} = \left(\begin{matrix}{x}_{{r}_{k + 1}} \\ {\dot{x}}_{{r}_{k + 1}} \\ {F}_{{R}_{k + 1}}\end{matrix}\right)$, *xₖ* is a state variable at a previous moment, ${x}_{k} = \left(\begin{matrix}{x}_{{r}_{k}} \\ {{{x}_{r}}^{.}}_{k} \\ {F}_{{R}_{k}}\end{matrix}\right)$, *uₖ* is a system input, *uₖ* = *T_{mₖ}*, *y*_{*k*+1} is an output at a next moment, ${y}_{k + 1} = \left(\begin{matrix}{y}_{{1}_{k + 1}} \\ {y}_{{2}_{k + 1}} \\ {y}_{{3}_{k + 1}}\end{matrix}\right)$, *G* is a state matrix $G = \left[\left(\begin{matrix}0 & 1 & 0 \\ 0 & - \frac{B}{M} & \frac{1}{M} \\ 0 & 0 & k\end{matrix}\right){Δ}_{t}+I\right]$ , *F* is an input matrix, $F = \left[\left(\begin{matrix}0 \\ \frac{{g}_{m}}{{Mr}_{pg}} \\ 0\end{matrix}\right){Δ}_{t}\right]$, and *C* is an output matrix, $C = \left(\begin{matrix}1 & 0 & 0 \\ 0 & 1 & 0 \\ 0 & 0 & 1\end{matrix}\right)$; and based on Kalman filter principles, designing the following iterative estimation formula: $\left\{\begin{matrix}{x}_{k + 1}^{′} = {Gx}_{k} + {Fu}_{k} \\ {P}_{pre} = GPG ′ + Q \\ K = {P}_{pre} H ′ / \left({HP}_{pre}H′+R\right) \\ P = \left(I-KH\right) {P}_{pre} \\ {x}_{k + 1} = {x}_{k + 1}^{′} + K \left({Z}_{k}-{Hx}_{k + 1}^{′}\right)\end{matrix}\right. ;$
wherein *Q* and *R* are diagonal matrices, *Pₚᵣₑ* is an estimated covariance matrix, *P* is an updated error covariance matrix, an initial value of *P* is a diagonal matrix, *H* is a measurement matrix, *Zₖ* is an actual sensor measurement value, *H'* is a transposed matrix of the matrix *H, K* is a Kalman gain, *G'* is a transposed matrix of the matrix *G,* ${x}_{k + 1}^{′}$ is an estimated state variable value, and *x*_{*k+*1} is an updated state variable value.

5. The rack force estimation system for a steer-by-wire system according to claim 4, **characterized in that** the actual measurement value *Zₖ* is a rack displacement *x_{rᵣₑₐₗ}* output from the signal preprocessing module, and the measurement matrix *H* is (1 0 0).

6. The rack force estimation system for a steer-by-wire system according to claim 4, **characterized in that**
when *k* in the equation ${{F}_{R}}^{.} = k {F}_{R}$ is a non-zero constant, a range of values of *k* is (0, 2000), an estimate of the generalized rack force in the Kalman filter estimation unit is multiplied by the non-zero constant *k*1 to obtain an actual generalized rack force, a range of values of the non-zero constant *k*1 being (-10000, 10000).

7. The rack force estimation system for a steer-by-wire system according to claim 1, **characterized in that** the rack displacement signal processing unit is further configured to perform amplitude limiting processing on a rack displacement signal and then perform first-order low-pass filtering processing on the rack displacement signal to obtain a target rack displacement signal;
the rack velocity signal processing unit is further configured to perform amplitude limiting processing on a rack velocity signal and then perform first-order low-pass filtering processing on the rack velocity signal to obtain a target rack velocity signal; and
the motor torque signal processing unit is further configured to perform amplitude limiting processing on a motor torque signal and then perform first-order low-pass filtering processing on the motor torque signal to obtain a target motor torque signal.

8. The rack force estimation system for a steer-by-wire system according to claim 3, **characterized in that** the estimation result filtering processing unit is further configured to apply first-order low-pass filtering processing to an estimated generalized rack force, and a corresponding filter coefficient is selected based on a rack velocity, a rack acceleration, an angle of a steering wheel and an angular velocity of the steering wheel.

9. The rack force estimation system for a steer-by-wire system according to claim 3, **characterized in that** the estimation result phase compensation processing unit is further configured to apply phase lead processing to an estimated generalized rack force, and the phase compensation parameters are selected based on a rack velocity and a rack acceleration by:
obtaining a two-dimensional lookup table based on the rack velocity and the rack acceleration, the rack velocity or the rack acceleration in the two-dimensional lookup table being positively correlated with the phase compensation parameters.

10. The rack force estimation system for a steer-by-wire system according to claim 4, **characterized in that** the Kalman filter estimation unit is further configured to estimate the rack displacement and the rack velocity.
